# EUROPÄISCHE PATENTSCHRIFT

(11) **EP 3 850 240 B1**
(45) Veröffentlichungstag und Bekanntmachung des Hinweises auf die Patenterteilung: **12.10.2022**
(21) Anmeldenummer: 19759357.7
(22) Anmeldetag: 26.08.2019
(51) Int. Cl.: F16D 65/00

(54) **BREMSSATTEL EINER SCHEIBENBREMSE UND SCHEIBENBREMSE**
BRAKE CALIPER OF A DISK BRAKE, AND DISK BRAKE
ÉTRIER D'UN FREIN À DISQUE ET FREIN À DISQUE

(30) Priorität: 10.09.2018 DE 102018122008
(43) Veröffentlichungstag der Anmeldung: 21.07.2021
(73) Patentinhaber: KNORR-BREMSE Systeme für Nutzfahrzeuge GmbH, 80809 München (DE)
(72) Erfinder: FISCHL, Tobias, 80336 München (DE); PRITZ, Wolfgang, 80637 München (DE)
(86) Internationale Anmeldenummer: PCT/EP2019/072726
(87) Internationale Veröffentlichungsnummer: WO 2020/052954

(56) Entgegenhaltungen:
- DE-A1-102016 115 176
- DE-A1-102016 120 478
- DE-B3-102011 103 963
- DE-U1-202014 010 485

## Beschreibung

Die vorliegende Erfindung betrifft einen Bremssattel, insbesondere einen Schiebesattel, einer Scheibenbremse eines Nutzfahrzeugs gemäß dem Oberbegriff des Anspruchs 1 sowie eine Scheibenbremse.

Bremssättel, beispielsweise bekannt aus der DE 10 2016 115 176 A1, der DE 10 2011 103 963 B3 oder der DE10 2016 120 478 A1, dienen als Bestandteile von Scheibenbremsen, insbesondere solche für Nutzfahrzeuge, in der Hauptsache dazu, Funktionsteile aufzunehmen, die zum Bremsbetrieb erforderlich sind.

Hierzu zählen vor allem eine Zuspanneinrichtung mit einer Gewindestangeneinheit mit Druckstück, die bei einem Bremsvorgang einen in einem Bremsträger gelagerten Bremsbelag gegen eine Bremsscheibe der Scheibenbremse drückt.

Bei diesem Vorgang wird die Gewindestangeneinheit in Scheibenrichtung bewegt. Sobald der zuspannseitige Belag sich in Kontakt mit der Bremsscheibe befindet, wird durch die entstehende Gegenkraft der Bremssattel so verschoben, dass ein im Bereich eines Sattelrückens angeordneter zweiter Bremsbelag in Richtung der Bremsscheibe geschoben wird. Sobald auch dieser reaktionsseitige Bremsbelag die Scheibe berührt, wird eine Bremswirkung erzeugt.

Die Zuspanneinheit wird darüber hinaus zur Sicherstellung eines konstanten Lüftspiels zwischen den Bremsbelägen und der Bremsscheibe mit zunehmendem Verschleiß der Bremsbeläge weiter in Richtung der Bremsscheibe ausgefahren.

Die für einen Zuspannvorgang benötigte Zuspannkraft wird dabei über einen exzentrisch zur Gewindestangeneinheit gelagerten Bremshebel erzeugt. Der Bremshebel selbst wird üblicherweise von einem Druckluftzylinder betätigt, der auf einer der Bremsscheibe abgewandten Seite eines Zuspannabschnitts des Bremssattels befestigt ist, wobei dieser Zuspannabschnitt einen Aufnahmeraum zur Aufnahme zumindest einer Zuspanneinrichtung, enthaltend die oben genannte Gewindestangeneinheit, aufweist.

Die gesamte Zuspannkraft wird dabei durch den Bremssattel abgestützt. Der Bremssattel wird dabei aufgrund des Kraftflusses, der durch Teile des Zuspannabschnitts, des Sattelrückens und insbesondere die Zugstreben führt, verformt.

Die Zugstreben müssen dabei bauraumbedingt dünnwandig und mit geringem Querschnitt ausgeführt werden. Daher ist es notwendig, die Konzentration der bei einem Bremsvorgang auftretenden Spannungen durch geeignete Geometrieverläufe des Bremssattels so zu verteilen, dass eine hohe Lebensdauer des Bremssattels gewährleistet werden kann.

Zur Montage der Bauteile der Zuspanneinrichtung im Zuspannabschnitt ist diese mit einer Öffnung ausgestaltet, die durch ein Bodenblech nach Montage der Bauteile verschlossen wird.

Aufgabe der vorliegenden Erfindung ist es, einen Bremssattel dahingehend zu verbessern, dass die bei einem Bremsvorgang auftretenden Spannungen weiter reduziert werden, um die Lebensdauer des Bremssattels zu erhöhen und gleichzeitig eine hohe Steifigkeit zur Erreichung des geforderten Bremsmoments beizubehalten.

Diese Aufgabe wird durch einen Bremssattel, insbesondere einen Schiebesattel einer Scheibenbremse eines Nutzfahrzeugs mit den Merkmalen des Anspruchs 1 gelöst.

Die Aufgabe wird des Weiteren durch eine Scheibenbremse, insbesondere für ein Nutzfahrzeug mit den Merkmalen des Anspruchs 4 gelöst.

Der erfindungsgemäße Bremssattel weist einen einen Aufnahmeraum zur Aufnahme zumindest einer Zuspanneinrichtung umschließenden Zuspannabschnitt auf. Der Bremssattel weist des Weiteren einen Sattelrücken und zwei im Wesentlichen parallel und mit Abstand zueinander verlaufende, den Zuspannabschnitt mit dem Sattelrücken miteinander verbindende Zugstreben auf.

Der Bremssattel weist des Weiteren einen den Aufnahmeraum verschließenden Verschlussdeckel auf sowie eine Schnittstelle zur Lagerung eines verschwenkbaren Bremshebels auf der dem Verschlussdeckel abgewandten Seite des Zuspannabschnitts.

Zwischen dem Zuspannabschnitt, dem Sattelrücken und den Zugstreben ist eine Montageöffnung zum Einsetzen und Herausnehmen von Bremsbelägen ausgebildet.

Das Verhältnis der Länge des Zuspannabschnitts zur Summe der Länge des Zuspannabschnitts und einer Zugstrebe beträgt dabei zwischen 0,4 und 0,3.

Durch dieses Längenverhältnis, bei dem gegenüber aus dem Stand der Technik bekannten Bremssätteln die Zugstreben relativ zum Zuspannabschnitt länger ausgebildet sind, ermöglicht eine größere Verformung der Zugstreben bei einem Bremsvorgang, was zu einer Reduzierung der auftretenden Spannungen im Bremssattel führt.

Die längere Ausbildung der Zugstreben führt jedoch ab einem bestimmten Längenverhältnis zu einer Reduzierung der Gesamtsteifigkeit des Bremssattels und begrenzt so den Bereich des optimalen Verhältnisses zwischen der Länge des Zuspannabschnitts und der Summe der Länge des Zuspannabschnitts und der Zugstrebe.

Vorteilhafte Ausführungsvarianten der Erfindung sind Gegenstand der Unteransprüche.

Mangels einer bevorzugten Ausführungsvariante beträgt das Verhältnis der Länge des Zuspannabschnitts zur Summe der Länge des Zuspannabschnitts und einer Zugstrebe zwischen 0,38 und 0,36.

Dieses Verhältnis ergibt eine optimale Spannungsreduzierung bei gleichzeitiger hoher Steifigkeit des Bremssattels.

Gemäß einer weiteren bevorzugten Ausführungsvariante weist die Schnittstelle zur Lagerung des Bremshebels einen Zylinderstift auf.

Die Bremshebellagerung erfolgt bei den aus dem Stand der Technik bekannten Bremssätteln üblicherweise über ein Nadellager, so dass durch die Lagerung des Bremshebels mittels eines Zylinderstiftes die Wandstärke zur Schnittstelle vergrößert werden kann, was insgesamt die Gesamtabstützlänge des Bremssattels verkürzt.

Weitere Vorteile des erfindungsgemäßen Bremssattels bestehen in der Möglichkeit, für den Bremssattel ein weniger kostenintensives, hochfestes Gussmaterial einsetzen zu können.

Die durch die erfindungsgemäße Geometrie erreichte höhere Lebensdauer des Bremssattels wird dabei ohne zusätzliches Material zum Guss des Bremssattels erreicht.

Die erfindungsgemäße Scheibenbremse für ein Nutzfahrzeug weist eine Bremsscheibe, einen die Bremsscheibe übergreifenden Bremssattel sowie einen die Bremsscheibe umgreifenden Bremsträger auf. Beidseitig der Bremsscheibe sind Bremsbeläge im Bremsträger gelagert. Die Scheibenbremse weist des Weiteren eine Zuspanneinrichtung auf, mit der die Bremsbeläge an die Bremsscheibe andrückbar sind sowie einen am Bremssattel gelagerten Bremshebel. Der Bremssattel ist dabei wie oben beschrieben ausgebildet.

Nachfolgend werden bevorzugte Ausführungsbeispiele anhand der nachfolgenden Zeichnungen näher beschrieben. Es zeigen:
- Fig. 1: eine schematische Draufsicht auf eine Scheibenbremse mit Bremssattel, Bremsscheibe und Bremsträger gemäß dem Stand der Technik,
- Fig. 2: eine schematische Schnittansicht des in Fig. 1 gezeigten Bremssattels gemäß Stand der Technik mit Darstellung des Verhältnisses der Länge des Zuspannabschnitts zur Summe der Länge des Zuspannabschnitts und einer Zugstrebe des Bremssattels,
- Fig. 3 und 4: den Fig. 1 und 2 entsprechende Darstellungen einer Scheibenbremse und eines Bremssattels gemäß einer bevorzugten Ausführungsvariante der Erfindung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremssattels, der Bremsscheibe, der Bremsbeläge, des Zuspannabschnitts, des Sattelrückens, der Zugstrebe und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern

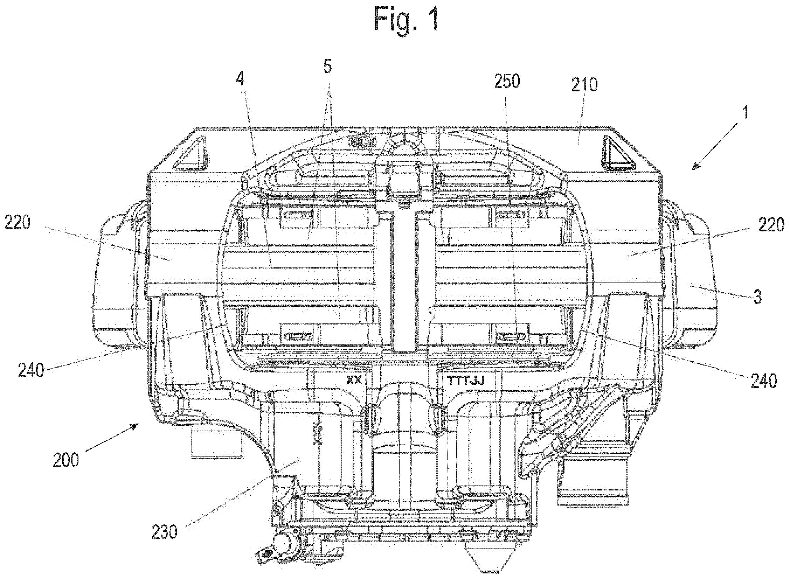

In Fig. 1 ist mit dem Bezugszeichen 1 eine Scheibenbremse bezeichnet, wie sie aus dem Stand der Technik prinzipiell bekannt ist.

Die Scheibenbremse 1 weist eine Bremsscheibe 4, einen die Bremsscheibe 4 übergreifenden Bremssattel 200 und einen die Bremsscheibe 4 umgreifenden Bremsträger 3 auf. Beidseitig der Bremsscheibe 4 sind im Bremsträger 3 Bremsbeläge 5 gelagert.

Der Bremssattel 200 besteht dabei im Wesentlichen aus einem Sattelrücken 210, einem einen Aufnahmeraum zur Aufnahme zumindest einer Zuspanneinrichtung umschließenden Zuspannabschnitt 230 sowie zwei im Wesentlich parallel und mit Abstand zueinander verlaufende, den Zuspannabschnitt 230 mit dem Sattelrücken 210 miteinander verbindende Zugstreben 220.

Auf der der Bremsscheibe 4 abgewandten Seite des Zuspannabschnitts 230 ist eine Schnittstelle 260 zur Lagerung eines verschwenkbaren Bremshebels angeformt, der durch einen aus einem hier nicht dargestellten Bremszylinder vorstehenden Stößel bei Betätigung der Scheibenbremse verschwenkt wird.

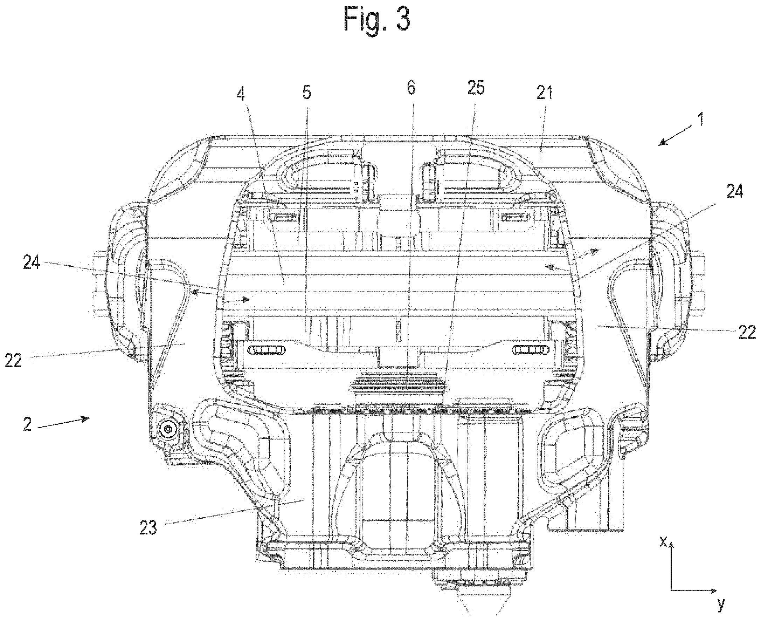

Die Fig. 3 zeigt eine Scheibenbremse 1 gemäß einer Ausführungsvariante der Erfindung.

Auch diese Scheibenbremse 1 ist im Wesentlichen in ähnlicher Weise aufgebaut wie die in Fig. 1 beschriebene Scheibenbremse, mit einer Bremsscheibe 4, einem die Bremsscheibe 4 übergreifenden Bremssattel 2, einem die Bremsscheibe 4 umgreifenden Bremsträger 3 sowie beidseitig der Bremsscheibe 4 am Bremsträger 3 gelagerte Bremsbeläge 5 und einer Zuspanneinrichtung 6, mit der die Bremsbeläge 5 an die Bremsscheibe 4 in einer Richtung x parallel zur Drehachse der Bremsscheibe 4 andrückbar sind.

Wie in den Fig. 1 und 3 des Weiteren zu erkennen ist, ist der Aufnahmeraum zur Aufnahme der Zuspanneinrichtung 6 durch einen Verschlussdeckel 25 zu dem zuspannseitigen Bremsbelag 5 hin verschlossen, wobei ein Teil der Zuspanneinheit, der hier mit dem Bezugszeichen 6 markiert ist, in Gestalt einer Gewindestangeneinheit, durch eine Öffnung im Verschlussdeckel 25, 250 in Richtung des zuspannseitigen Bremsbelags 5 vorsteht.

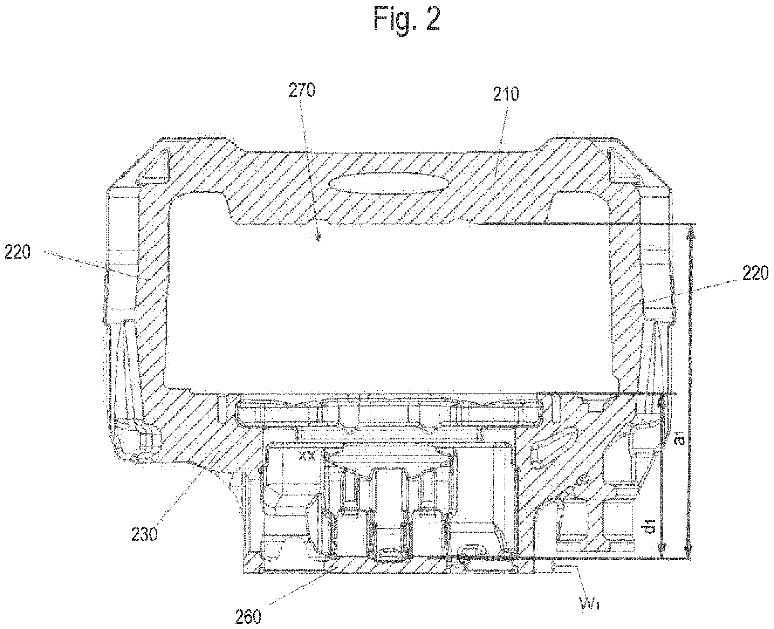

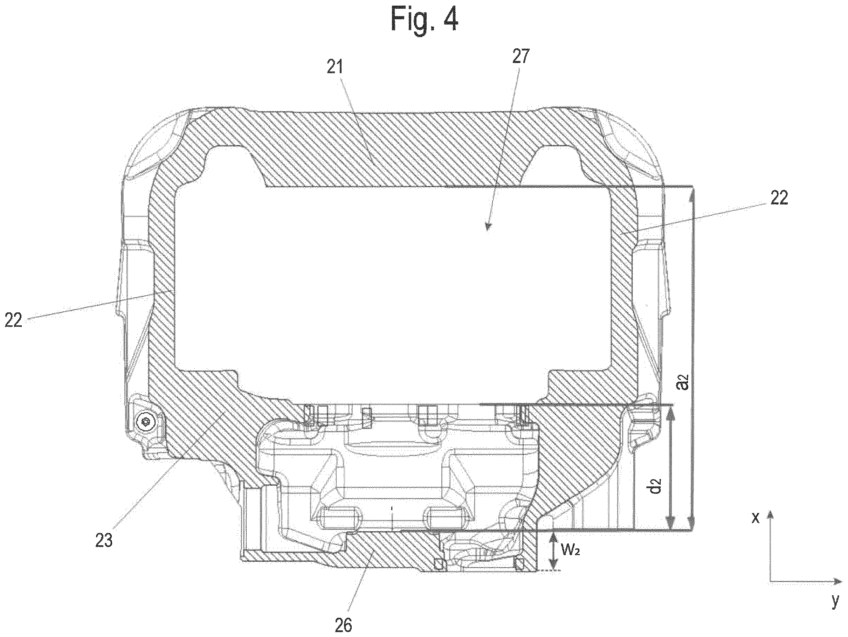

Wie ein Vergleich der Figuren 1 und 3 bzw. der **Figuren 2** **und** **4** zeigt (die Figuren 2 und 4 zeigen jeweilige Schnittansichten des in den Figuren 1 und 3 gezeigten Bremssattels), sind bei dem Bremssattel 2 gemäß Figuren 3 und 4 die Zugstreben 22 länger ausgebildet als die Zugstreben 220 des aus dem Stand der Technik bekannten Bremssattels 200.

In den Figuren 2 und 4 ist mit dem Bezugszeichen a₁, a₂ die Summe der Länge des Zuspannabschnitts 23, 230 und der im Bild rechten Zugstrebe 22, 220 bezeichnet, während die Bezeichnung d₁ die Länge des Zuspannabschnitts 230 und d₂ die Länge des Zuspannabschnitts 23 bezeichnet.

Während das Verhältnis der Länge d₂ des Zuspannabschnitts 23 zur Summe a₂ der Länge des Zuspannabschnitts 23 und einer Zugstrebe 22 zwischen 0,4 und 0,3, besonders bevorzugt zwischen 0,38 und 0,36 beträgt, beträgt das entsprechende Verhältnis bei dem aus dem Stand der Technik bekannten Bremssattel etwa 0,5, sprich die Länge des Zuspannabschnitts 23 entspricht in etwa der Länge der Zugstreben 220.

Durch die Verlängerung der Zugstreben und damit einhergehenden Verkürzung der Länge des Zuspannabschnitts 23 wird die mögliche Verformung der Zugstreben 22 im Bereich eines der Montageöffnung 27 zugewandten Randes 24 gegenüber den Zugstreben 220 des Bremssattels 200 gemäß Stand der Technik deutlich erhöht, was zu einer Reduktion auftretender Spannungen innerhalb des Bremssattels bei einem Bremsvorgang führt und so das Risiko von Rissbildungen innerhalb des Bremssattels reduziert.

Die Vergrößerung der durch den Zuspannabschnitt 23, den Sattelrücken 21 und die Zugstreben 22 gebildeten Montageöffnung 27 des Bremssattels erleichtert darüber hinaus das Einsetzen und Herausnehmen der Bremsbeläge 5.

Wie einem Vergleich der Figuren 2 und 4 des Weiteren zu entnehmen ist, ist die Wandstärke w₂ des Bremssattels 2 im Bereich einer Schnittstelle 26 zur Lagerung eines Bremshebels gegenüber der Wandstärke w₁ des aus dem Stand der Technik bekannten Bremssattels 200 vergrößert ausgebildet, wodurch ebenfalls die Gesamtabstützlänge des Bremssattels, d.h. die Summe a₂ der Länge des Zuspannabschnitts 23 und der Zugstrebe 22 verkürzt ist.

Die Schnittstelle 26 zur Lagerung eines Bremshebels weist hier bevorzugt einen Zylinderstift mit kleinem Durchmesser auf. Bei den aus dem Stand der Technik bekannten Bremssätteln werden hingegen üblicherweise Nadellager mit großem Durchmesser eingesetzt, die aufgrund des begrenzten Bauraums im Fahrzeug eine dünnere Wandstärke w₁ der Schnittstelle des Bremssattels 200 bedingen und damit die Gesamtabstützlänge des Bremssattels 200 vergrößern.

### Bezugszeichenliste

- 1: Scheibenbremse

- 2: Bremssattel
- 21: Sattelrücken
- 22: Zugstrebe
- 23: Zuspannabschnitt
- 24: Rand
- 25: Verschlussdeckel
- 26: Schnittstelle
- 27: Montageöffnung

- 3: Bremsträger
- 4: Bremsscheibe
- 5: Bremsbelag
- 6: Zuspanneinrichtung
- 7: Nachstelleinrichtung

- 200: Bremssattel
- 210: Sattelrücken
- 220: Zugstrebe
- 230: Zuspannabschnitt
- 240: Rand
- 250: Verschlussdeckel
- 260: Schnittstelle
- 270: Montageöffnung

- a₁: Summe der Länge des Zuspannabschnitts und einer Zugstrebe
- a₂: Summe der Länge des Zuspannabschnitts und einer Zugstrebe
- d₁: Länge des Zuspannabschnitts
- d₂: Länge des Zuspannabschnitts
- w₁: Wandstärke der Schnittstelle
- w₂: Wandstärke der Schnittstelle

## Patentansprüche

1. Bremssattel (2), insbesondere Schiebesattel, einer Scheibenbremse (1) eines Nutzfahrzeugs, aufweisend
einen einen Aufnahmeraum zur Aufnahme zumindest einer Zuspanneinrichtung (6) umschließenden Zuspannabschnitt (23),
einen Sattelrücken (21),
zwei im Wesentlichen parallel und mit Abstand zueinander verlaufende, den Zuspannabschnitt (23) mit dem Sattelrücken (21) miteinander verbindende Zugstreben (22),
einen den Aufnahmeraum verschließenden Verschlussdeckel (25),
eine Schnittstelle (26) zur Lagerung eines verschwenkbaren Bremshebels auf der dem Verschlussdeckel (25) abgewandten Seite des Zuspannabschnitts (23), wobei zwischen dem Zuspannabschnitt (23), dem Sattelrücken (21) und den Zugstreben (22) eine Montageöffnung (27) zum Einsetzen und Herausnehmen von Bremsbelägen (5) ausgebildet ist,
**dadurch gekennzeichnet, dass**
das Verhältnis der Länge des Zuspannabschnitts (23) zur Summe der Länge des Zuspannabschnitts (23) und einer Zugstrebe (22) zwischen 0,4 und 0,3 beträgt.

2. Bremssattel nach Anspruch 1,
**dadurch gekennzeichnet, dass**
das Verhältnis der Länge des Zuspannabschnitts (23) zur Summe der Länge des Zuspannabschnitts (23) und einer Zugstrebe (22) zwischen 0,38 und 0,36 beträgt.

3. Bremssattel nach Anspruch 1 oder 2,
**dadurch gekennzeichnet, dass**
die Schnittstelle (26) zur Lagerung des Bremshebels einen Zylinderstift aufweist.

4. Scheibenbremse (1), insbesondere für ein Nutzfahrzeug, aufweisend
eine Bremsscheibe (4),
einen die Bremsscheibe (4) übergreifenden Bremssattel (2),
einen die Bremsscheibe (4) umgreifenden Bremsträger (3),
beidseitig der Bremsscheibe (4) im Bremsträger (3) gelagerte Bremsbeläge (5), eine Zuspanneinrichtung (6), mit der die Bremsbeläge (5) an die Bremsscheibe (4) andrückbar sind,
einen am Bremssattel (2) gelagerten Bremshebel,
**dadurch gekennzeichnet, dass**
der Bremssattel (2) gemäß einem der vorstehenden Ansprüche ausgebildet ist.

## Claims

1. Brake calliper (2), in particular sliding calliper, of a disc brake (1) of a commercial vehicle, having
an application section (23) enclosing a receptacle space for accommodating at least one application device (6),
a calliper back (21),
two trailing arms (22) extending substantially parallel to and at a distance from each other and connecting the application section (23) to the calliper back (21),
a closing cover (25) closing the receptacle space,
an interface (26) for mounting a pivotable brake lever on that side of the application section (23) which is averted from the closing cover (25), wherein an installation opening (27) is formed between the application section (23), the calliper back (21) and the trailing arms (22) for installing and removing brake pads (5),
**characterised in that**
the ratio of the length of the application section (23) and the sum of the lengths of the application section (23) and a trailing arm (22) is between 0.4 and .03.

2. Brake calliper according to claim 1,
**characterised in that**
the ratio of the length of the application section (23) and the sum of the lengths of the application section (23) and a trailing arm (22) is between 0.38 and 0.36.

3. Brake calliper according to claim 1 or 2,
**characterised in that**
the interface (26) for mounting the brake lever has a dowel pin.

4. Disc brake (1), in particular for a commercial vehicle, having
a brake disc (4),
a brake calliper (2) overlapping the brake disc (4),
an adapter (3) encompassing the brake disc (4),
brake pads (5) mounted in the adapter (3) on both side of the brake disc (4),
an application device (6) with which the brake pads (5) can be pressed against the brake disc (4),
a brake lever mounted at the brake calliper (2),
**characterised in that**
the brake calliper is designed in accordance with any of the preceding claims.

## Revendications

1. Etrier (2) de frein, notamment étrier coulissant, d'un frein (1) à disque d'un véhicule utilitaire, comportant une partie (23) de serrage entourant un espace de logement pour la réception d'au moins un dispositif (6) de serrage,
un dos (21) d'étrier,
deux tirants (22) sensiblement parallèles et à distance l'un de l'autre reliant entre eux la partie (23) de serrage et le dos (21) de l'étrier,
un couvercle (25) de fermeture fermant l'espace de logement,
une interface (26) de montage d'un levier de frein pivotant du côté, non tourné vers le couvercle (25) de fermeture, de la partie (23) de serrage,
dans lequel, entre la partie (23) de serrage, le dos (21) de l'étrier et les tirants (22) est constituée une ouverture (27) de montage pour insérer et retirer des garnitures (5) de frein, **caractérisé en ce que**
le rapport de la longueur de la partie (23) de serrage à la somme des longueurs de la partie (23) de serrage et d'un tirant (22) est compris entre 0,4 et 0,3.

2. Etrier de frein suivant la revendication 1,
**caractérisé en ce que**
le rapport de la longueur de la partie (23) de serrage à la somme des longueurs de la partie (23) de serrage et d'un tirant (22) est comprise entre 0,38 et 0,36.

3. Etrier de frein suivant la revendication 1 ou 2,
**caractérisé en ce que**
l'interface (26) a une broche cylindrique pour le montage du levier de frein.

4. Frein (1) à disque, notamment d'un véhicule utilitaire, comportant
un disque (4) de frein,
un étrier (2) de frein chevauchant le disque (4) de frein,
un flasque (3) de frein entourant le disque (4) de frein,
des deux côtés du disque (4) de frein, des garnitures (5) de frein montées dans le flasque (3) de frein,
un dispositif (6) de serrage, par lequel les garnitures (5) de frein peuvent être pressées sur le disque (4) de frein,
un levier de frein monté sur l'étrier (2) de frein,
**caractérisé en ce que**
l'étrier (2) de frein est constitué suivant l'une des revendications précédentes.
